# EUROPEAN PATENT SPECIFICATION

(11) **EP 3 196 126 B1**
(45) Date of publication and mention of the grant of the patent: **13.03.2019**
(21) Application number: 16151850.1
(22) Date of filing: 19.01.2016
(51) Int. Cl.: B64D 41/00

(54) **LOCKING AND UNLOCKING MECHANISM**
VER- UND ENTRIEGELUNGSMECHNISMUS
MÉCANISME DE VERROUILLAGE ET DE DÉVERROUILLAGE

(43) Date of publication of application: 26.07.2017
(73) Proprietor: Hamilton Sundstrand Corporation, Charlotte, NC 28217 (US)
(72) Inventor: SOBOLAK, Piotr, 76-200 Slupsk (PL); PAWELEC, Izabel, 98-300 Wielun (PL)
(74) Representative: Dehns

(56) References cited:
- EP-A1- 2 458 226
- DE-A1- 3 926 132
- GB-A- 1 420 935
- US-A- 5 588 318
- US-A1- 2013 078 026

## Description

### TECHNICAL FIELD

The present disclosure relates to locking/unlocking mechanisms for deployable components. The mechanism is particularly suitable as an unlocking mechanism for a ram air turbine (RAT) actuator but could also find application in other deployable or movable systems such as other actuators, valves, pumps and the like.

### BACKGROUND

Many systems and mechanisms are known in which a component is movable between a closed or stowed position and an open or deployed position, and wherein a component should be locked in the desired position and unlocked to permit movement between the positions. Particular examples are valves or actuators, such as RAT actuators as described in more detail below.

Locking mechanisms are known to secure the actuator, valve etc. in a particular position, and unlocking mechanisms are known to release the locking mechanism and permit movement of the actuator/valve components to a different position, whereupon the actuator components can then also be locked in the second position by means of a locking mechanism. A locking mechanism for a RAT actuator is disclosed, for example, in US 2013/0327207.

Ram air turbines are used in aircraft to provide electric and/or hydraulic power to components of the aircraft, for example in the event of failure of other electrical or hydraulic power generating equipment on board the aircraft. In normal operation of the aircraft, the RAT is housed within the aircraft, but when needed it is extended into the airflow around the aircraft such that it may turn, due to the airflow, and generates electrical and/or hydraulic power. The RAT is typically pivoted into position by means of an actuator, for example a hydraulic actuator. The actuator typically includes a lock bolt which extends to deploy the RAT. The actuator has a lock mechanism which prevents inadvertent movement of the lock bolt and, thus, inadvertent deployment of the RAT. The main locking mechanism typically comprises a spring loaded lock bolt which must be moved in an axial direction to unlock the actuator. Such an actuator is disclosed, for example, in US 2015/0232195. RAT actuators are also disclosed in US 8,640,563, US 9,193,472 and US 2015/0096437.

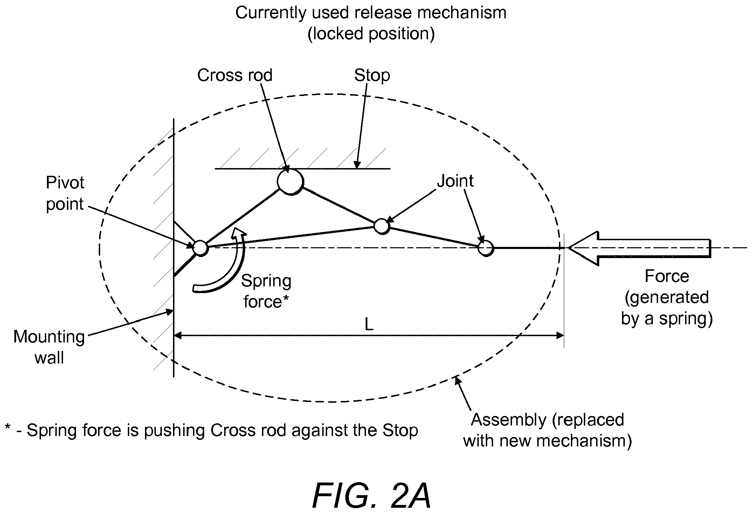

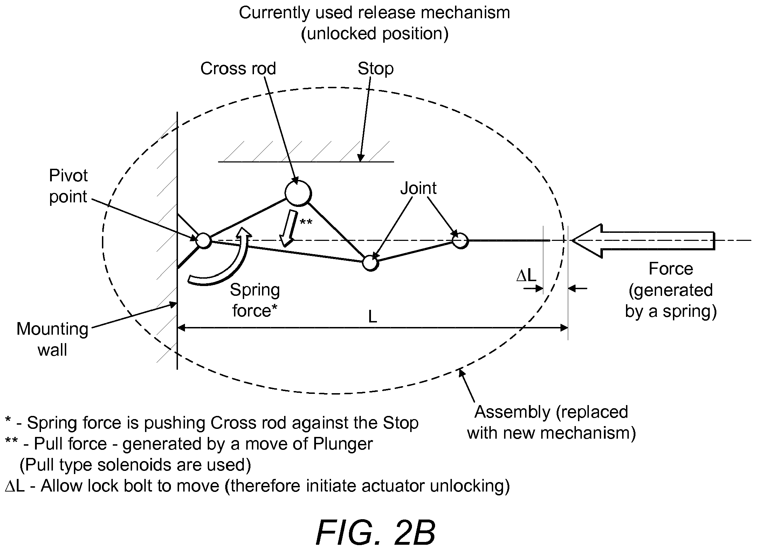

An unlocking mechanism is provided to permit the axial bolt movement. A conventional unlocking mechanism is shown, for example, in Figs. 2A and 2B, comprising a linkage arrangement, one end of which is rotatably coupled to one end of the lock bolt and the other end of which is axially fixed and rotatably coupled to, for example, a mounting wall. A solenoid moves the link between a locked (FIG. 2A) and an unlocked (FIG 2B) position. In the locked position, the linkage assembly pushes against the lock bolt against the force of the lock bolt spring to prevent axial movement of the lock bolt. When it is required to deploy the RAT, the lock bolt needs to be released for axial movement of the actuator. As seen in Fig. 2B, a pull force, greater than the spring force, is exerted on the linkage assembly by means of a solenoid, which moves the linkage assembly out of engagement with the lock bolt. This allows the lock bolt to move axially to initiate actuator unlocking to permit deployment. The solenoid must have sufficient force to displace the lock bolt against the force of the lock bolt spring and the linkages and joints require sufficient axial and radial space and may also be prone to wear or damage.

The size and weight of components is of particular concern in aircraft where there is a desire to use lighter and smaller components, whilst maintaining safety and reliability.

There is a desire, therefore, to provide a locking/unlocking mechanism for such systems to prevent/permit axial movement of a component such as a lock bolt, without the need for such large solenoids and a series of links. Solenoid locking mechanisms are known from EP 2458226.

### SUMMARY

The present invention provides an actuator assemly according to claim 1.

### BRIEF DESCRIPTION OF THE DRAWINGS

Preferred embodiments will now be described by way of example only and with reference to the accompanying drawings in which:
Figure 1 shows a ram air turbine (RAT);
Figure 2A shows a schematic view of a typical linkage release mechanism in the locked position;
Figure 2B shows the mechanism of Fig. 2A in the unlocked position;
Figs. 3A and 3B show a schematic view of the piston, cylinder and spring arrangement of the actuator lock bolt, which would replace the conventional mechanism shown within the dashed lines of Figs. 2A and 2B.
Figs. 4A and 4B show the components of Figs. 3A and 3B in a sectional view.

### DETAILED DESCRIPTION

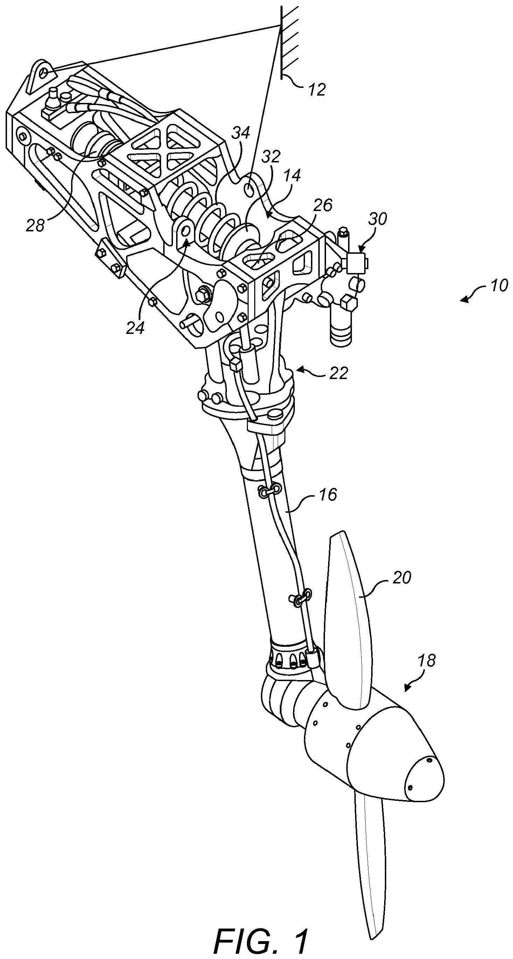

Figure 1 shows a RAT system 10 which is secured to an aircraft structure 12 by housing 14. The housing 14 pivotally supports a strut 16 having a turbine 18 at one end. The turbine 18 includes blades 20 which impart rotational drive to a generator 22 and a hydraulic pump 30, for example. An actuator 24 is secured to the strut at a first end 26 and to the housing at a second end 28. The actuator 24 is illustrated in its deployed position. The actuator 24 comprises a cylinder 32 which is biased by a spring 34 in order to deploy the strut 16. When the cylinder 32 is retracted, it is held in its retracted position by means of a lock bolt of a locking mechanism, details of which will be described below.

The unlocking of the actuator is initiated by permitting movement of the lock bolt 38. This is made possible by means of a release mechanism according to the present disclosure which will be described further below.

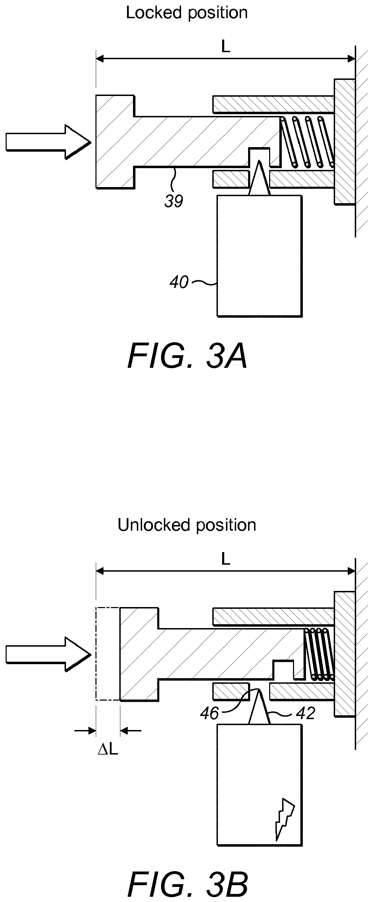

Figs. 3A and 3B show a schematic view of the piston, cylinder and spring arrangement of the actuator lock bolt, and the release mechanism which would replace the conventional, linkage-type mechanism shown within the dashed lines of Figs. 2A and 2B.

Fig. 3A shows the piston 39 in the locked position and, in Fig. 3B, in the unlocked position permitting movement of the piston 39 and the lock bolt for deployment of the actuator, this can be realised due to the fact that the lock bolt spring force is greater than the piston spring force.

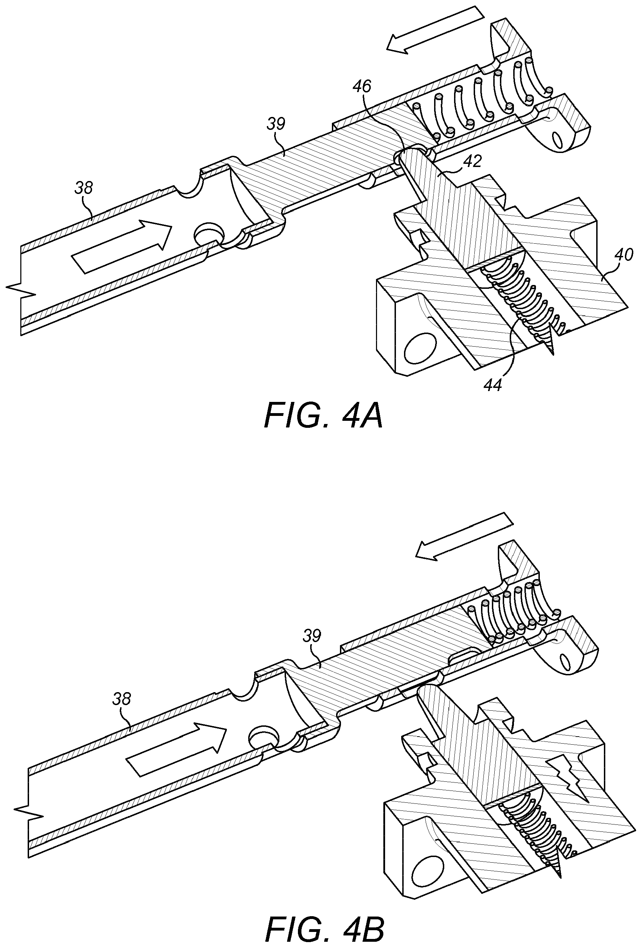

Figs. 4A and 4B show the components of Figs. 3A and 3B in a sectional view.

The release mechanism comprises a solenoid 40 having a solenoid plunger 42 and a solenoid bias spring 44, the solenoid plunger having a solenoid plunger tip 46 arranged to engage with the piston 39.

In the examples shown, when the solenoid is de-energised, the solenoid bias spring biases the solenoid plunger in an extended position in which the solenoid plunger tip extends into engagement with the piston, preferably engaging it in a recess or detent in or on the piston, to prevent axial movement of the lock bolt.

When the solenoid is energised (Fig. 4B), the solenoid plunger (which is ferromagnetic) retracts due to magnetic field force creation in the solenoid, therefore the solenoid biased spring contracts and, hence, draws the solenoid plunger tip out of engagement with the piston 39, thus permitting axial movement of the piston and the lock bolt 38, against the spring 34 force.

The example shown comprises a single solenoid. It is also possible to have two or perhaps even more solenoids arranged in parallel (or coaxially) to provide redundancy and extra engagement force. If two solenoids are used, the release mechanism reacts more quickly and meets the requirements of aviation regulations for the duplication of critical systems.

An alternative embodiment could have a push-type solenoid, rather than a pull-type solenoid, in which case the solenoid would be in the locked position when the solenoid was energised and in the unlocked position when the solenoid was de-energised.

The arrangement of the present release mechanism requires significantly fewer component parts as compared to the linkage system of the prior art, which, in turn, reduces the manufacturing, assembly and testing costs and avoids the need for shims as in the prior art systems. This can result in a more reliable and smaller deployment system, as smaller forces have to be overcome by the solenoid.

This mechanism could be easily adapted to existing actuators.

When the RAT is to be retracted to the stowed position, the lock bolt 38 is moved in the opposition direction, allowing the piston to slide in the same direction as the lock bolt until the solenoid plunger tip will jump into the recess or detent, preferably located on a piston side wall, locking it in position. This movement of the piston is realised by uncompressing (expanding) the supporting spring.

The above is a description of a single embodiment by way of example only. Modifications may be made without departing from the scope of this disclosure. While the apparatus has been described in the context of unlocking a RAT actuator, it may, as mentioned above, find use in other applications, for example of the types of actuator, valves, pumps or the like.

## Claims

1. An actuator assembly comprising a hydraulic actuator (24), an axially moveable lock bolt (38) that actuates the movement of the actuator, and a release mechanism for releasably locking the lock bolt against axial movement, the release mechanism comprising:
a solenoid assembly arranged, in use, in proximity to an axially moveable member (39) in axially moveable engagement with the lock bolt, the solenoid assembly comprising a solenoid (40), a solenoid bias member (44) and a solenoid plunger (42) having a plunger tip (46), **characterised in that**, when the solenoid is in a first state of either energised or not energised, the solenoid bias member or the magnetic field force causes the solenoid plunger to move in a direction perpendicular to the axially movable member (39) to bring the plunger tip into locking engagement with the axially moveable member by securing in a recess or detent on the axially moveable member to prevent axial movement thereof together with the lock bolt, and when the solenoid is in a second, opposite state being the other of not energised or energised, the magnetic field force or the solenoid bias member causes the solenoid plunger to move to bring the plunger tip out of locking engagement with the recess or detent of axially moveable member thus permitting axial movement thereof together with the lock bolt.

2. The assembly of claim 1, wherein, in the first state, the solenoid is not energised and in the second state, the solenoid is energised.

3. The assembly of claim 1, wherein, in the first state, the solenoid is energised and in the second state, the solenoid is not energised.

4. The assembly of any preceding claim, wherein said axially moveable member comprises a piston (39) in moveable engagement with the lock bolt.

5. The assembly of any preceding claim, wherein the solenoid bias member comprises a spring (44).

6. The assembly of any preceding claim, wherein the mechanism comprises two such solenoid assemblies.

## Patentansprüche

1. Aktoranordnung, umfassend einen Hydraulikaktor (24), einen axial bewegbaren Verriegelungsbolzen (38), der die Bewegung des Aktors betätigt, und einen Freigabemechanismus zum lösbaren Verriegeln des Verriegelungsbolzens gegenüber axialer Bewegung, wobei der Freigabemechanismus Folgendes umfasst:
eine Solenoidanordnung, die in Gebrauch in der Nähe eines axial bewegbaren Elementes (39) in axial bewegbarem Eingriff mit dem Verriegelungsbolzen angeordnet ist, wobei die Solenoidanordnung ein Solenoid (40), ein Solenoidvorspannelement (44) und einen Solenoidkolben (42), der eine Kolbenspitze (46) aufweist, umfasst, **dadurch gekennzeichnet, dass**, wenn sich das Solenoid in einem ersten Zustand, entweder erregt oder nicht erregt, befindet, das Solenoidvorspannelement oder die Magnetfeldkraft bewirkt, dass sich der Solenoidkolben in eine Richtung senkrecht zu dem axial bewegbaren Element (39) bewegt, um die Kolbenspitze in verriegelnden Eingriff mit dem axial bewegbaren Element zu bringen, indem sie in einer Aussparung oder Arretierung an dem axial bewegbaren Element befestigt wird, um axiale Bewegung davon zusammen mit dem Verriegelungsbolzen zu verhindern, und wenn sich das Solenoid in einem zweiten, entgegengesetzten Zustand befindet, der der andere von nicht erregt oder erregt ist, die Magnetfeldkraft oder das Solenoidvorspannelement bewirkt, dass sich der Solenoidkolben bewegt, um die Kolbenspitze aus dem verriegelnden Eingriff mit der Aussparung oder Arretierung des axial bewegbaren Elements zu bringen, wodurch axiale Bewegung davon zusammen mit dem Verriegelungsbolzen ermöglicht wird.

2. Anordnung nach Anspruch 1, wobei das Solenoid in dem ersten Zustand nicht erregt ist und das Solenoid in dem zweiten Zustand erregt ist.

3. Anordnung nach Anspruch 1, wobei das Solenoid in dem ersten Zustand erregt ist und das Solenoid in dem zweiten Zustand nicht erregt ist.

4. Anordnung nach einem vorhergehenden Anspruch, wobei das axial bewegbare Element einen Kolben (39) in bewegbarem Eingriff mit dem Verriegelungsbolzen umfasst.

5. Anordnung nach einem vorhergehenden Anspruch, wobei das Solenoidvorspannelement eine Feder (44) umfasst.

6. Anordnung nach einem vorhergehenden Anspruch, wobei der Mechanismus zwei derartige Solenoidanordnungen umfasst.

## Revendications

1. Ensemble actionneur comprenant un actionneur hydraulique (24), un boulon de verrouillage mobile axialement (38) qui actionne le déplacement de l'actionneur, et un mécanisme de libération pour verrouiller de manière libérable le boulon de verrouillage pour empêcher son déplacement axial, le mécanisme de libération comprenant :
un ensemble de solénoïde agencé, en utilisation, à proximité d'un élément mobile axialement (39) dans une mise en prise mobile axialement avec le boulon de verrouillage, l'ensemble de solénoïde comprenant un solénoïde (40), un élément de sollicitation de solénoïde (44) et un plongeur de solénoïde (42) ayant une extrémité de plongeur (46), **caractérisé en ce que**, lorsque le solénoïde est dans un premier état soit excité, soit non excité, l'élément de sollicitation de solénoïde ou la force de champ magnétique déplace le plongeur du solénoïde dans une direction perpendiculaire à l'élément mobile axialement (39) pour amener l'extrémité du plongeur en mise en prise de verrouillage avec l'élément mobile axialement par immobilisation dans un creux ou un cran sur l'élément mobile axialement pour empêcher le déplacement axial de celle-ci avec le boulon de verrouillage, et lorsque le solénoïde est dans un second état opposé étant l'autre de l'état non excité ou excité, la force de champ magnétique ou l'élément de sollicitation du solénoïde déplace le plongeur du solénoïde pour amener l'extrémité du plongeur hors de la mise en prise de verrouillage avec le creux ou le cran de l'élément mobile axialement, permettant ainsi le déplacement axial de celle-ci avec le boulon de verrouillage.

2. Ensemble selon la revendication 1, dans lequel, dans le premier état, le solénoïde n'est pas excité et dans le second état, le solénoïde est excité.

3. Ensemble selon la revendication 1, dans lequel, dans le premier état, le solénoïde est excité et, dans le second état, le solénoïde n'est pas excité.

4. Ensemble selon une quelconque revendication précédente, dans lequel ledit élément mobile axialement comprend un piston (39) en mise en prise mobile avec le boulon de verrouillage.

5. Ensemble selon une quelconque revendication précédente, dans lequel l'élément de sollicitation de solénoïde comprend un ressort (44).

6. Ensemble selon une quelconque revendication précédente, dans lequel le mécanisme comprend deux tels ensembles de solénoïde.
